(19) **Europäisches Patentamt / European Patent Office / Office européen des brevets**

(11) **EP 1 680 288 B1**

(12) **FASCICULE DE BREVET EUROPEEN**

(45) Date de publication et mention
de la délivrance du brevet:
**07.05.2008 Bulletin 2008/19**

(51) Int Cl.:
***B60C 17/06*** (2006.01)

(21) Numéro de dépôt: **04790541.9**

(86) Numéro de dépôt international:
**PCT/EP2004/011706**

(22) Date de dépôt: **18.10.2004**

(87) Numéro de publication internationale:
**WO 2005/039897 (06.05.2005 Gazette 2005/18)**

(54) **APPUI DE SECURITE A ENDURANCE AMELIOREE**

SICHERHEITSSTÜTZE MIT VERBESSERTER FESTIGKEIT

SAFETY SUPPORT WITH IMPROVED STRENGTH

(84) Etats contractants désignés:
**AT BE BG CH CY CZ DE DK EE ES FI FR GB GR HU IE IT LI LU MC NL PL PT RO SE SI SK TR**

(30) Priorité: **24.10.2003 FR 0312499**

(43) Date de publication de la demande:
**19.07.2006 Bulletin 2006/29**

(73) Titulaires:
• **Société de Technologie Michelin**
**63000 Clermont-Ferrand Cedex 09 (FR)**
• **Michelin Recherche et Technique S.A.**
**1763 Granges-Paccot (CH)**

(72) Inventeurs:
• **CHARDIN, Hervé**
**F-63000 Clermont-Ferrand (FR)**
• **COGNE, Michael**
**F-63000 Clermont-Ferrand (FR)**
• **MOREL, Noël**
**F-63530 Enval (FR)**

(74) Mandataire: **Dequire, Philippe Jean-Marie Denis**
**Manufacture Française des Pneumatiques, Michelin,**
**23, place des Carmes-Déchaux,**
**SGD/LG/PI - F35- Ladoux**
**63040 Clermont-Ferrand Cedex 09 (FR)**

(56) Documents cités:
**EP-A- 0 796 747          WO-A-00/76791**

EP 1 680 288 B1

**Description**

La présente invention concerne les appuis de sécurité pour pneumatiques de véhicules, destinés à être montés sur leurs jantes, à l'intérieur des pneumatiques pour supporter la charge en cas de défaillance du pneumatique ou de pression de gonflage anormalement basse.

Elle concerne plus particulièrement les appuis de sécurité dits « structurels », généralement réalisés à partir d'un matériau élastomérique et comportant :

- une base sensiblement cylindrique destinée à s'adapter autour de la jante ;
- un sommet avec une paroi radialement extérieure destinée à entrer en contact avec la paroi interne du sommet du pneumatique en cas de perte de pression et laissant une garde par rapport à celle-ci à la pression nominale de fonctionnement du pneumatique ; et
- un corps annulaire reliant la base et le sommet.

Le document EP 0 796 747 décrit un tel appui de sécurité dans lequel le sommet a une paroi extérieure qui est sensiblement cylindrique de révolution et comporte des rainures longitudinales. La demande WO 00/76791 décrit aussi un tel appui de sécurité.

Pour améliorer l'endurance en roulage à plat ou à pression de gonflage réduite des ensembles appuis de sécurité et pneumatiques, on incorpore usuellement sur la face interne du pneumatique des compositions lubrifiantes ou gels. Ces gels sont destinés à réduire la friction entre l'appui et la face interne du pneumatique entourant l'appui.

De tels gels comportent usuellement un agent lubrifiant tel de la glycérine et un agent épaississant tel de la silice.

L'invention a pour objet un appui de sécurité dont la performance d'endurance en roulage à plat est améliorée relativement aux appuis précédents.

Un tel appui de sécurité selon l'invention est caractérisé en ce que, en considérant E, surface de révolution d'axe X commun avec l'appui, définie, l'appui étant monté sur sa jante de service, en tout plan normal à l'axe X passant par une zone de contact entre l'appui et le pneumatique lors d'une condition de roulage à plat, par le cercle dont le rayon est égal au rayon du point de ladite paroi extérieure du sommet de l'appui le plus éloigné de l'axe X, et $f$ étant la flèche prise par ledit appui monté sur sa jante de service et sous une charge $Z$, charge nominale dudit pneumatique, ladite surface E est circonscrite entre deux cylindres de révolution de rayons $R_{max}$ et $R_{min}$ satisfaisant la relation suivante :

$$0.2f \prec R_{max} - R_{min} \prec 2f$$

et

de préférence, cet écart satisfait :

$$0.3f \prec R_{max} - R_{min} \prec f$$

Il est à noter que la surface de révolution E est définie uniquement dans les zones de la paroi extérieure du sommet destinées à venir en contact avec la paroi interne du sommet du pneumatique lors d'une condition de roulage à plat. C'est-à-dire que l'on ne tient compte que des parties de cette paroi qui viennent effectivement en contact avec la paroi interne du sommet du pneumatique lors d'un roulage à plat. On ne tient pas compte en particulier du rayon du fond des rainures disposées le long de ce sommet. Ces fonds de rainures ne viennent pas en contact avec la paroi interne du sommet du pneumatique lors d'une condition de roulage à plat.

Cette surface de révolution E peut être déterminée pratiquement par des mesures géométriques de l'appui monté sur sa jante de service. E est aussi très proche du profil théorique E' de l'enveloppe de la paroi extérieure du sommet de l'appui. Dans ce qui suit, on appellera la surface de révolution E l'enveloppe de la paroi extérieure du sommet de l'appui. Les différences entre les deux surfaces de révolution E et E' sont liées notamment à toutes les incertitudes de fabrication des appuis, les retraits des matériaux après leur moulage, leur réticulation ou leur vulcanisation, le faux rond de la jante de service, etc..

Il est avantageux de disposer la zone de rayon minimum de la surface E, enveloppe de la paroi extérieure du sommet, axialement à au moins une extrémité latérale du sommet de l'appui.

La zone de rayon minimum $R_{min}$ est préférentiellement disposée du côté de l'appui destiné à être placée du côté extérieur du véhicule.

L'enveloppe E de la paroi extérieure du sommet d'un appui de sécurité selon l'invention peut aussi comprendre une seconde zone de rayon $R'_{min}$, supérieure ou égale à $R_{min}$, disposée axialement de l'autre côté du plan médian circonférentiel P relativement à la zone de rayon $R_{min}$ et satisfaisant la relation :

$$0.2f \prec R_{max} - R'_{min} \prec 2f$$

et de préférence

$$0.3f \prec R_{max} - R'_{min} \prec f$$

La présence de ces zones de rayons inférieurs disposées au moins à une extrémité latérale du sommet de l'appui permet de limiter l'endommagement de la paroi interne du pneumatique ainsi que du sommet de l'appui lors d'un roulage à plat et ainsi d'augmenter significativement l'endurance de l'ensemble appui pneumatique dans ces conditions de roulage à plat.

Plusieurs modes de réalisation d'appuis de sécurité selon l'invention sont maintenant décrits à l'aide du dessin annexé dans lequel :

- la figure 1 est une vue de côté d'un appui de sécurité ;
- la figure 2 est une coupe AA tel qu'indiqué à la figure 1 d'un exemple de corps annulaire d'un appui de sécurité selon l'invention ;
- la figure 3 est une vue en coupe axiale d'un ensemble composé d'un appui de sécurité selon l'invention monté sur une jante de roue et d'un pneumatique ;
- la figure 4 est une vue schématique de côté d'un appui de sécurité monté sur une jante de roue, l'ensemble étant soumis à une charge Z ;
- la figure 5 est une coupe axiale d'un second exemple d'appui de sécurité selon l'invention ; et
- la figure 6 est une coupe axiale d'un troisième exemple d'appui de sécurité selon l'invention.

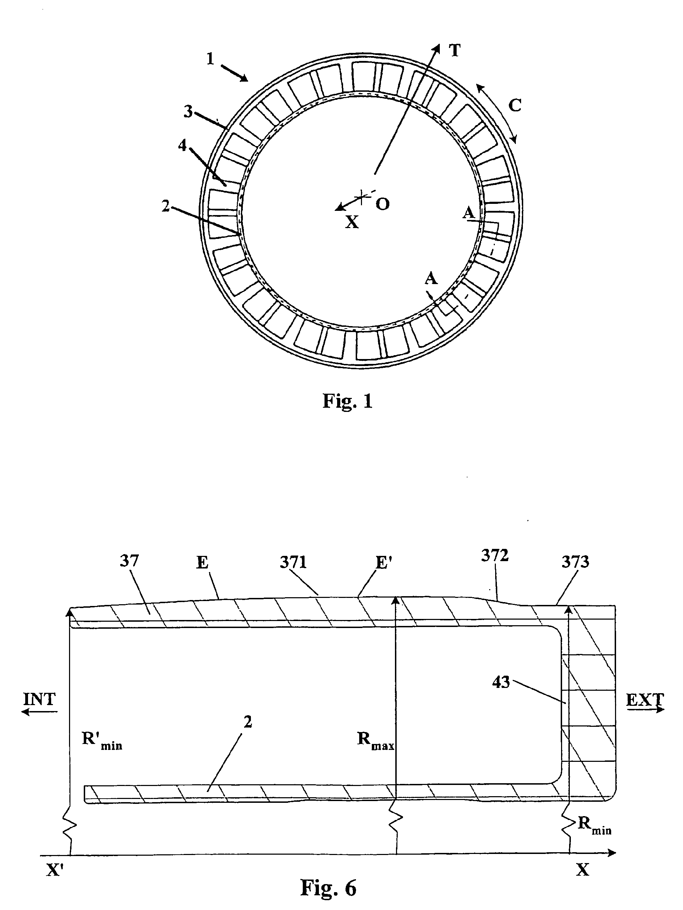

La figure 1 présente en vue de côté un appui de sécurité 1 correspondant à ceux de la demande WO00/76791. Cet appui comprend essentiellement trois parties :

- une base 2, de forme généralement annulaire ;
- un sommet 3, sensiblement annulaire, avec sur sa paroi radialement extérieure des rainures longitudinales 5 ; et
- un corps annulaire 4 de liaison entre la base 2 et le sommet 3.

La figure 1 précise aussi les conventions géométriques utilisés dans la présente demande. L'axe X passant par O est l'axe de rotation de l'appui. Après montage de l'appui dans la cavité d'un pneumatique et autour d'une jante, l'axe X est aussi l'axe commun de rotation de l'appui, du pneumatique et de la jante. La direction T est une direction radiale c'est-à-dire passant par l'axe X et perpendiculaire à celui-ci. La direction C est une direction circonférentielle, en tout point de l'appui, du pneumatique ou de la jante, cette direction circonférentielle est perpendiculaire à la direction radiale passant par ce point ainsi qu'à l'axe X.

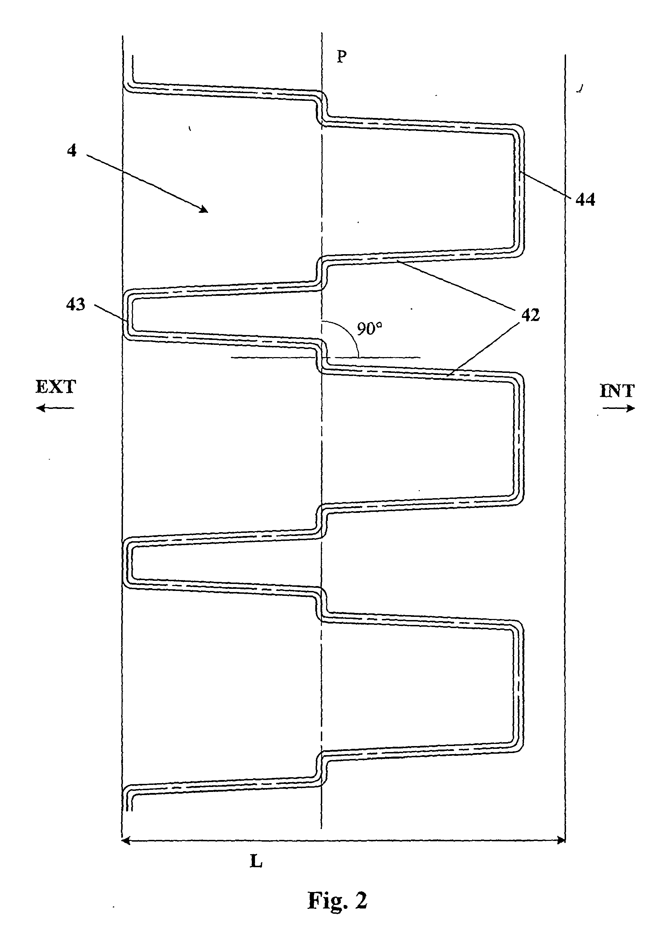

La figure 2 est une coupe AA tel qu'indiqué à la figure 1 d'un exemple de corps annulaire d'un appui de sécurité selon l'invention. Cet exemple est décrit dans le document WO 00/76791. Ce corps annulaire 4 est constitué d'une pluralité de cloisons 42, radiales, réparties sur la circonférence de l'appui et s'étendant axialement de part et d'autre du plan P, plan médian circonférentiel, et par des jonctions 43 et 44, radiales, s'étendant sensiblement circonférentiellement et reliées à chacune de leurs extrémités à deux cloisons 42 adjacentes. Dans l'exemple présenté, les jonctions 43 et 44 ont des longueurs circonférentielles différentes. On place de préférence les jonctions circonférentielles les plus longues 44 du côté de l'appui destiné à être disposé vers l'intérieur du véhicule. Les jonctions peuvent être disposées en bordure latérale du corps annulaire (exemple 43) ou en retrait (exemple 44). La géométrie de cette figure 2 n'est présentée qu'à titre d'exemple et de très nombreuses autres géométries de corps annulaire sont utilisables par les appuis de sécurité selon l'invention.

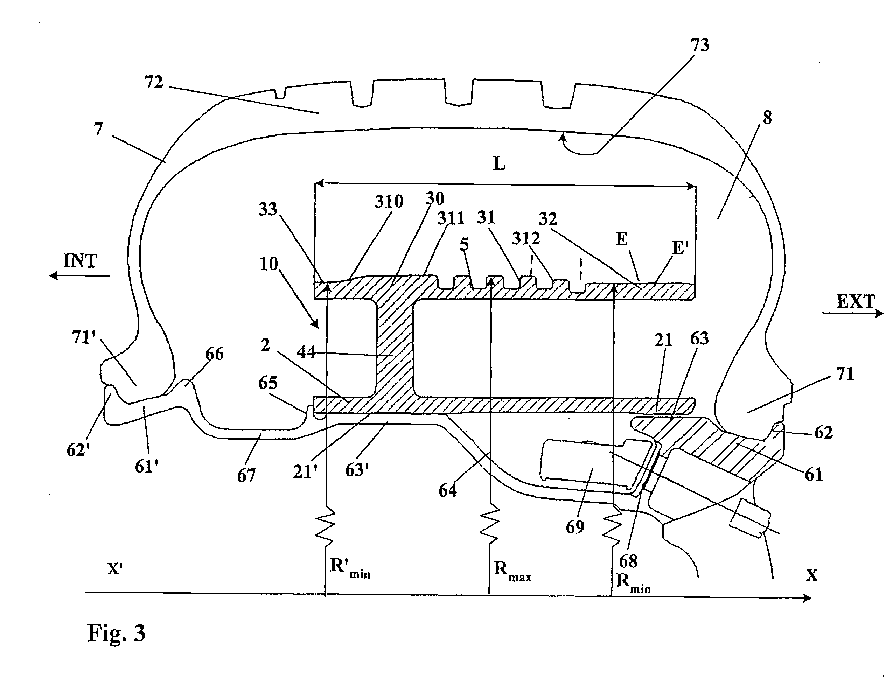

La figure 3 est une vue en coupe axiale d'un ensemble composé d'un appui de sécurité selon l'invention monté sur une jante de roue et d'un pneumatique. Sur cette figure sont indiqués les côtés dits « extérieur » et « intérieur » de l'ensemble, c'est-à-dire destinés à être disposés vers l'extérieur du véhicule ou vers l'intérieur du véhicule.

L'appui de sécurité 10 comprend comme précédemment décrit une base 2, un corps annulaire 4 et un sommet 30.

La jante de roue 6 est notamment décrite dans le document WO 00/05083 et comprend deux sièges de jante 61 extérieur et 61' intérieur, de diamètres inégaux et dont les génératrices sont inclinées vers l'extérieur. Le siège intérieur 61' disposé du côté intérieur a un diamètre supérieur à celui du siège extérieur 61. Les deux sièges sont prolongés extérieurement par des saillies ou humps 62 et 62'. Le siège extérieur 61 est prolongé axialement vers l'intérieur par une première portée 63 suivie d'une gorge circonférentielle 64, et d'une seconde portée 63'. La seconde portée 63' est munie à son extrémité vers l'intérieur du véhicule d'une butée de positionnement 65. Comme l'indique la figure, l'appui de sécurité 10 vient en appui radialement sur les deux portées 63 et 63' et axialement contre la butée 65. Il est à noter que l'élément de jonction circonférentiel 44 est disposé axialement en regard de la portée 63' pour assurer une bonne transmission des efforts entre l'appui et la jante. De même, l'élément de jonction 43 est préférentiellement disposé en regard de la portée 63. Le siège intérieur 61' est prolongé axialement vers l'extérieur du véhicule par un rebord de jante 66, rebord délimitant avec la butée de positionnement 65 une gorge de montage 67. La jante 6 comporte aussi un trou de valve 68 disposé dans le flanc extérieur de la gorge circonférentielle 64. Une valve et un dispositif de mesure de la pression de gonflage 69 sont fixés à ce trou de valve.

Un pneumatique 7 est monté sur la jante 6. Ce pneumatique 7 comporte notamment deux bourrelets 71 et 71' entourant les sièges de jante 61 et 61' et un sommet 72 dont la paroi intérieure 73 est destinée à venir s'appuyer contre le sommet 30 de l'appui en cas de perte notable de pression de gonflage et de roulage à plat.

L'appui 10 est un appui conforme à l'invention. Son sommet 30 comporte trois parties, une partie centrale 31 dont l'enveloppe extérieure atteint le rayon maximum $R_{max}$, une partie latérale extérieure 32 dont l'enveloppe extérieure à un rayon $R_{min}$ et une partie latérale intérieure 33 dont l'enveloppe extérieure à un rayon $R'_{min}$.

Les parties latérales extérieure 32 et intérieure 33 ont sensiblement une géométrie de cylindre de révolution. La partie centrale 32 comprend axialement de l'intérieur vers l'extérieur du véhicule une zone 310 sensiblement conique dont le rayon varie de $R'_{min}$ à $R_{max}$, une zone 311 dont l'enveloppe extérieure est cylindrique de révolution de rayon $R_{max}$, puis une seconde zone de transition 312 avec la zone extérieure 32. Les zones 311 et 312 comportent des rainures circonférentielles. De telles rainures peuvent aussi être disposées dans les zones latérales 33 et 32.

Le sommet 30 de l'appui 10 comprend donc à ses deux extrémités latérales une zone de rayon inférieur au rayon maximum de la partie centrale.

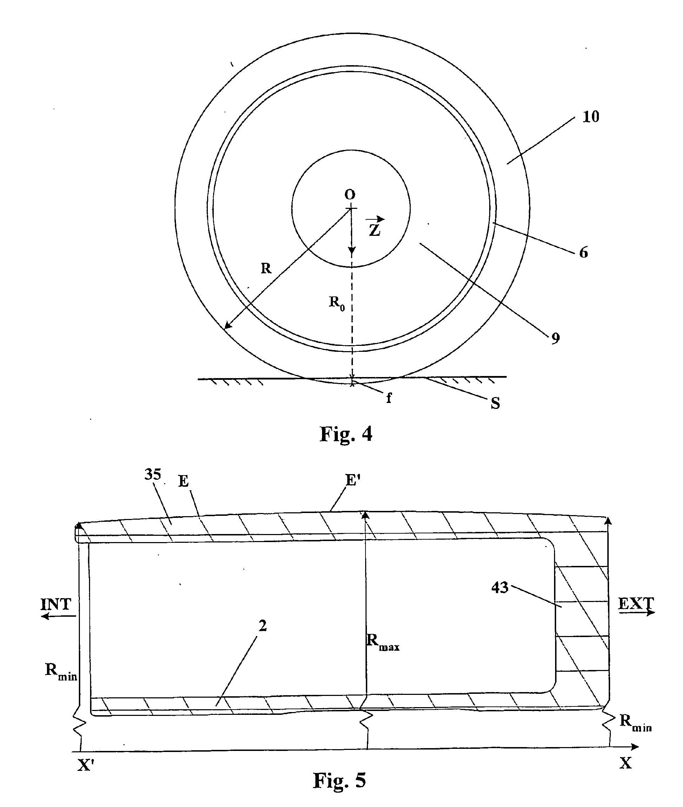

La valeur de ces écarts entre $R_{max}$ et $R_{min}$ ainsi que $R'_{min}$ est explicité à l'aide de la figure 4 qui présente schématiquement la mise en appui sur une surface plane S d'un ensemble roue (composée d'un disque 9 et d'une jante 6) et appui de sécurité 10.

L'ensemble roue et appui de sécurité 10 est monté sur un mandrin (non représenté) d'axe X passant par O. A l'état libre, le rayon extérieur R de l'ensemble correspond au rayon $R_{max}$ de la partie centrale 31 du sommet 30 de l'appui 10. En revanche, au centre de la zone de contact entre l'ensemble roue appui de sécurité et la surface S, lorsqu'une charge Z est appliqué en O, le rayon diminue et devient $R_0$. On appelle flèche f, la valeur de l'écart entre R et $R_0$ en ayant choisi comme charge Z la charge nominale du pneumatique qui est la charge maximale que le pneumatique peut supporter en service. Cette valeur est définie par les normes ETRTO.

La détermination expérimentale de f est aisément réalisée en suivant le mode opératoire précédent. Cette détermination est réalisée à 20°C.

Il est bien entendu indispensable de choisir comme roue et jante la roue et la jante de service de l'appui de sécurité. C'est-à-dire, les roue et jante pour lesquelles l'appui de sécurité a été conçu.

Les demanderesses ont observé de façon surprenante que le fait de choisir pour les valeurs de $R_{max}$ $R_{min}$ et $R'_{min}$ des valeurs qui satisfont la relation suivante :

$$0.2f \prec R_{max} - R_{min} \prec 2f$$

et, de préférence

$$0.3f \prec R_{max} - R_{min} \prec f$$

améliore de façon significative la performance en endurance lors d'un roulage à plat pour une quantité donnée de lubrifiant introduit dans la cavité interne 8 du pneumatique.

Il est à noter que le matériau constitutif principal des appuis de sécurité peut varier très fortement. Les propriétés mécaniques de ces appuis et en particulier la flèche f prise sous une charge et une géométrie de jante données vont aussi varier fortement. A titre d'exemple, le module d'élasticité d'un mélange caoutchouteux peut varier entre 8 et 40 MPa alors que celui d'un élastomère de polyuréthanne ou un élastomère thermoplastique entre 20 et 150 MPa. On considère par exemple le module d'extension à 10% de déformation et à 20°C.

Des essais ont été réalisés avec un appui de sécurité 120x440-40 en matériau caoutchouteux, où 120 correspond à la largeur en mm de l'appui, 440 à son diamètre en mm et 40 à sa hauteur aussi en mm.

On a constaté que la valeur de la flèche prise par l'ensemble appui et sa jante de service sous la charge nominale Z = 450 kg est de 6 mm. L'écart entre les valeurs de $R_{max}$ et $R_{min}$ ou $R'_{min}$ a été de zéro pour le témoin (géométrie sensiblement cylindrique de révolution du sommet) et de 2 mm pour l'appui selon l'invention.

Les ensembles appui jante et pneumatique ont été testés à 100 km/h, après l'introduction de 90 grammes d'un lubrifiant composé principalement de glycérine et de silice. Le véhicule de test était un Scenic 2 de Renault et l'ensemble pneumatique roue et appui testé en roulage à plat était disposé à l'arrière du véhicule. Le circuit du test était un circuit de type roulage autoroutier.

L'ensemble témoin a parcouru une distance de 70 km en roulage à plat, c'est-à-dire avec une pression relative de gonflage nulle entre la cavité du pneumatique et l'air ambiant avant endommagement de la paroi intérieure 73 du pneumatique notamment en regard de l'extrémité extérieure du sommet de l'appui. L'arrêt a été provoqué par une abrasion entre ces deux surfaces en regard. On peut penser que cette abrasion a été due à un défaut de lubrification entre ces surfaces.

L'ensemble comportant un appui selon l'invention 10 a parcouru une distance de 180 km avant arrêt.

Ce résultat montre l'intérêt très net de modifier la géométrie extérieure du sommet des appuis pour optimiser les performances en endurance à plat des ensembles appuis de sécurité roues et pneumatiques.

La figure 5 présente un second exemple d'appui de sécurité. Le sommet 35 comporte une paroi extérieure avec une courbure axiale telle que le rayon extérieur de l'appui est $R_{max}$ au centre du sommet et $R_{min}$ aux deux extrémités latérales. Comme précédemment, l'ordre de grandeur de la flèche prise par cet appui dans ses conditions de fonctionnement en roulage à plat sur sa jante de service est de l'ordre de 6 mm et la variation de rayon de l'ordre de 2 mm.

La figure 6 présente un troisième exemple d'appui de sécurité. Le sommet 37 comporte une paroi extérieure avec axialement de l'extérieur vers l'intérieur une première zone cylindrique de révolution 373 de rayon $R_{min}$, une zone conique 372 puis une zone de courbure sensiblement constante 371 telle qu'à l'extrémité intérieure du sommet on retrouve un rayon $R'_{min}$ très proche du rayon $R_{min}$.

Sur les figures des trois exemples d'appuis de sécurité selon l'invention présentés, les surfaces E et E' ont été confondues.

Les demanderesses ont aussi constatées que lorsque la variation de rayon est inférieure à 0.2 f, les conséquences en performance n'étaient pas significatives compte tenu de la dispersion inhérente à la fabrication des appuis et aux essais d'endurance. D'autre part, lorsque l'on augmente cette variation de rayon au-delà de 2 f, on observe un effet inverse à celui désiré.

Les trois géométries de sommet décrites ne l'ont été qu'à titre d'exemples et de nombreuses autres possibilités sont possibles sans sortir du cadre de cette invention tel que défini par les revendications suivantes.

**Revendications**

1. Appui de sécurité (10) destiné à être monté sur une jante (6) à l'intérieur d'un pneumatique (7) équipant un véhicule, pour supporter la bande de roulement (72) de ce pneumatique en cas de perte de pression de gonflage, comportant :

   - une base (2) sensiblement cylindrique destinée à s'adapter autour de la jante ;
   - un sommet (30, 35, 37) avec une paroi radialement extérieure (E) destinée à entrer en contact avec la paroi interne (73) du sommet (72) du pneumatique en cas de perte de pression et laissant une garde par rapport à celle-ci à la pression nominale de fonctionnement du pneumatique ; et
   - un corps annulaire (4) reliant la base et le sommet ;

   **caractérisé en ce que**, en considérant E enveloppe des zones de la paroi extérieure du sommet de l'appui destinées à venir en contact avec le pneumatique lors d'un roulage à plat, E étant définie lorsque l'appui est monté sur sa jante de service, et *f* étant la flèche prise par ledit appui monté sur sa jante de service et sous une charge Z, charge nominale dudit pneumatique, ladite surface E est circonscrite entre deux cylindres de révolution de rayons $R_{max}$ et $R_{min}$ satisfaisant la relation suivante :

   $$0.2f \prec R_{max} - R_{min} \prec 2f$$

2. Appui (10) selon la revendication 1, dans lequel $R_{max}$ - $R_{min}$ satisfait la relation suivante :

   $$0.3f \prec R_{max} - R_{min} \prec f$$

3. Appui selon l'une des revendications 1 ou 2, dans lequel la zone (32, 33) de rayon $R_{min}$ de E, enveloppe de la paroi radialement extérieure du sommet dudit appui, est disposée axialement à au moins une extrémité latérale du sommet de l'appui.

4. Appui selon la revendication 3, dans lequel ladite zone (32) de rayon $R_{min}$ est disposée du côté de l'appui destiné à être placée du côté extérieur du véhicule.

5. Appui selon l'une des revendications 3 et 4, dans lequel E, enveloppe de la paroi extérieure du sommet dudit appui, comprend une seconde zone (33) de rayon $R'_{min}$ supérieure ou égale à $R_{min}$, disposée axialement de l'autre côté du plan médian circonférentiel P relativement à la zone de rayon $R_{min}$ et satisfaisant la relation :

   $$0.2f \prec R_{max} - R'_{min} \prec 2f$$

   et de préférence :

   $$0.3f \prec R_{max} - R'_{min} \prec f$$

6. Appui selon l'une des revendications 1 à 5, dans lequel le sommet (30) dudit appui comprend des rainures longitudinales (5).

7. Appui selon l'une des revendications 1 à 6, dans lequel E, enveloppe de la paroi extérieure du sommet, présente, en section axiale, au moins une zone de courbure sensiblement constante.

8. Appui selon la revendication 7, dans lequel l'ensemble de E, enveloppe de la paroi extérieure du sommet, présente, en section axiale, une zone de courbure sensiblement constante.

9. Appui selon l'une des revendications 1 à 8, dans lequel au moins une extrémité latérale de E comprend une zone sensiblement cylindrique de révolution (32, 33, 373) de rayon minimum ($R_{min}$, $R'_{min}$).

10. Appui selon l'une des revendications 1 à 9, dans lequel le corps annulaire (4) dudit appui comporte une pluralité de cloisons radiales (42), réparties sur la circonférence et s'étendant axialement de part et d'autre du plan médian circonférentiel P et des jonctions radiales (43, 44) s'étendant sensiblement circonférentiellement et reliées à chacune de leurs extrémités à deux cloisons (42) adjacentes.

**Claims**

1. A safety support (10) intended to be mounted on a rim (6) inside a tyre (7) fitted on a vehicle, to support the tread (72) of said tyre in the event of a loss of inflation pressure, comprising:

   - a substantially cylindrical base (2), intended to conform to the rim;
   - a crown (30, 35, 37) with a radially outer wall (E) intended to enter into contact with the internal wall (73) of the crown (72) of the tyre in the event of a loss of pressure and leaving clearance relative thereto at the rated operating pressure of the tyre; and
   - an annular body (4) linking the base and the crown;

   **characterised in that**, with regard to E, a surface of revolution of common axis X with the support defined, when the support is mounted on its operating rim, in any axial plane passing through a contact zone between the support and the tyre when running flat, by the circle whose radius is equal to the radius of the point of said outer wall of the crown of the support furthest from the axis X, and $f$ being the deflection undergone by said support mounted on its operating rim and under a load Z, the rated load of said tyre, said surface E is confined between two cylinders of revolution of radius $R_{max}$ and $R_{min}$ satisfying the following relationship

$$0.2f < R_{max} - R_{min} < 2f$$

2. A support (10) according to claim 1, in which $R_{max}$-$R_{min}$ satisfies the following relationship:

$$0.3f < R_{max} - R_{min} < f$$

3. A support according to one of claims 1 or 2, in which the zone (32, 33) of radius $R_{min}$ of E, the envelope of the radially outer wall of the crown of said support, is disposed axially at at least one lateral end of the crown of the support.

4. A support according to claim 3, in which said zone (32) of radius $R_{min}$ is disposed on the side of the support intended to be positioned on the outside of the vehicle.

5. A support according to one of claims 3 and 4, in which E, the envelope of the outer wall of the crown of said support, comprises a second zone (33) of radius $R'_{min}$ greater than or equal to $R_{min}$, disposed axially

on the other side of the circumferential median plane P from the zone of radius $R_{min}$ and satisfying the relationship:

$$0.2f < R_{max} - R'_{min} < 2f$$

and preferably

$$0.3f < R_{max} - R'_{min} < f$$

6. A support according to one of claims 1 to 5, in which the crown (30) of said support comprises longitudinal grooves (5).

7. A support according to one of claims 1 to 6, in which E, the envelope of the outer wall of the crown, exhibits, in axial section, at least one zone of substantially constant curvature.

8. A support as claimed in claim 7, in which all of E, the envelope of the outer wall of the crown, exhibits, in axial section, a zone of substantially constant curvature.

9. A support according to one of claims 1 to 8, in which at least one lateral end of E comprises a zone (32, 33, 373) which takes the form substantially of a cylinder of revolution of minimum radius ($R_{min}$, $R'_{min}$).

10. A support according to one of claims 1 to 9, in which the annular body (4) of said support comprises a plurality of radial partitions (42), distributed over the circumference and extending axially either side of the circumferential median plane P, and radial junctions (43, 44) extending substantially circumferentially and connected at each of their ends to two adjacent partitions (42).

**Patentansprüche**

1. Sicherheitsstütze (10), die dazu vorgesehen ist, auf einer Felge (6) innerhalb eines Luftreifens (7), mit dem ein Fahrzeug ausgerüstet ist, angebracht zu werden, um die Lauffläche (72) dieses Luftreifens im Fall eines Fülldruckverlusts zu unterstützen, mit:

   - einer Basis (2), die im Wesentlichen zylindrisch ist und dazu vorgesehen ist, sich um die Felge anzuschmiegen;
   - einer Oberseite (30, 35, 37), die eine radial äußere Wand (E) besitzt, die dazu vorgesehen ist, im Fall eines Druckverlusts mit der Innenwand (73) der Oberseite (72) des Luftreifens in Kontakt zu gelangen und bei dem Nennbetriebsdruck des Luftreifens einen Abstand hierzu zu halten; und

- einen ringförmigen Körper (4), der die Basis mit der Oberseite verbindet;

**dadurch gekennzeichnet, dass** dann, wenn E als Hüllkurve der Zonen der Außenwand der Oberseite der Stütze, die dazu vorgesehen sind, bei einem Fahren auf der Felge mit dem Luftreifen in Kontakt zu gelangen, betrachtet wird, wobei E definiert ist, wenn die Stütze an ihrer betriebsbereiten Felge angebracht ist, und wobei f die Durchbiegung ist, die die an ihrer betriebsbereiten Felge angebrachte Stütze unter einer Last Z, der Nennlast des Luftreifens, erfährt, die Fläche E zwischen zwei rotationssymmetrischen Zylindern mit Radien $R_{max}$ und $R_{min}$ umbeschrieben ist, die die folgende Beziehung erfüllen:

$$0,2f < R_{max} - R_{min} < 2f.$$

2.  Stütze (10) nach Anspruch 1, wobei $R_{max}$ - $R_{min}$ die folgende Beziehung erfüllt:

$$0,3f < R_{max} - R_{min} < f.$$

3.  Stütze nach einem der Ansprüche 1 oder 2, wobei die Zone (32, 33) mit Radius $R_{min}$ von E, der Hüllkurve der radial äußeren Wand der Oberseite der Stütze, axial an wenigstens einem seitlichen Ende der Oberseite der Stütze angeordnet ist.

4.  Stütze nach Anspruch 3, wobei die Zone (32) mit Radius $R_{min}$ auf jener Seite der Stütze angeordnet ist, die dazu vorgesehen ist, an der Außenseite des Fahrzeugs angeordnet zu werden.

5.  Stütze nach einem der Ansprüche 3 und 4, wobei E, die Hüllkurve der Außenwand der Oberseite der Stütze, eine zweite Zone (33) mit Radius $R'_{min}$, der größer oder gleich $R_{min}$ ist, enthält, die axial auf der anderen Seite der Umfangsmittelebene P in Bezug auf die Zone mit Radius $R_{min}$ angeordnet ist und die folgende Beziehung erfüllt:

$$0,2f < R_{max} - R'_{min} < 2f$$

und vorzugsweise

$$0,3f < R_{max} - R'_{min} < f.$$

6.  Stütze nach einem der Ansprüche 1 bis 5, wobei die Oberseite (30) der Stütze longitudinale Rillen (5) aufweist.

7.  Stütze nach einem der Ansprüche 1 bis 6, wobei E, die Hüllkurve der Außenwand der Oberseite, im axialen Schnitt wenigstens eine Zone mit im Wesentlichen konstanter Krümmung aufweist.

8.  Stütze nach Anspruch 7, wobei die Gesamtheit von E, der Hüllkurve der Außenwand der Oberseite, im axialen Querschnitt eine Zone mit im Wesentlichen konstanter Krümmung aufweist.

9.  Stütze nach einem der Ansprüche 1 bis 8, wobei wenigstens ein seitliches Ende von E eine im Wesentlichen rotationssymmetrische zylindrische Zone (32, 33, 373) mit minimalem Radius ($R_{min}$, $R'_{min}$) aufweist.

10. Stütze nach einem der Ansprüche 1 bis 9, wobei der ringförmige Körper (4) der Stütze mehrere radiale Trennwände (42), die längs des Umfangs verteilt sind und sich axial beiderseits der Umfangsmittelebene P erstrecken, und radiale Übergänge (43, 44), die sich im Wesentlichen in Umfangsrichtung erstrecken und mit jedem ihrer Enden mit zwei benachbarten Trennwänden (42) verbunden sind, aufweist.

**Fig. 1**

**Fig. 6**

**Fig. 2**

Fig. 3

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0796747 A
- WO 0076791 A
- WO 0005083 A